Europäisches Patentamt

**European Patent Office**

**Office européen des brevets**

(11) Numéro de publication: **0 282 766 B1**

(12) **FASCICULE DE BREVET EUROPEEN**

(45) Date de publication de fascicule du brevet: **30.09.92**  (51) Int. Cl.5: **G02B 6/42**

(21) Numéro de dépôt: **88102561.3**

(22) Date de dépôt: **22.02.88**

(54) **Embase active de connecteur optique.**

(30) Priorité: **26.02.87 FR 8702558**

(43) Date de publication de la demande:
**21.09.88 Bulletin 88/38**

(45) Mention de la délivrance du brevet:
**30.09.92 Bulletin 92/40**

(84) Etats contractants désignés:
**BE DE FR GB IT LU NL SE**

(73) Titulaire: **ALCATEL CIT**
**12 Rue de la Baume**
**F-75008 Paris(FR)**

(72) Inventeur: **De Armorim, Lionel**
**17 rue Pen Ar Pavi**
**F-22300 Lannion(FR)**

(74) Mandataire: **Weinmiller, Jürgen et al**
**Lennéstrasse 9 Postfach 24**
**W-8133 Feldafing(DE)**

(56) Documents cités:
EP-A- 0 035 673      EP-A- 0 201 749
DE-A- 2 716 211      FR-A- 2 584 828
GB-A- 2 015 766      US-A- 4 060 309

RESEARCH DISCLOSURE, mars 1979, no.
17910, Industrial Opportunites Ltd, Vant.,
Hants, GB, "Connection of a photo-electric
component and a light pipe"

PATENT ABSTRACTS OF JAPAN, vol. 6, no.
111 (E-114)[989], 22 juin 1982; & JP-A-57 40
984

## Description

L'invention concerne un connecteur, notamment un connecteur utilisé en dehors des locaux, c'est-à-dire à ciel ouvert, et en particulier une embase de connecteur prévue pour être montée sur une face avant d'un appareil électronique et devant être généralement étanche, l'embase étant destinée à recevoir une fiche reliée à des fibres optiques ; les connecteurs sont destinés à relier des appareils électroniques entre eux, qu'ils soient proches ou distants.

Les embases de connecteur couramment utilisées dans ces conditions sont des embases passives c'est-à-dire ne comportant pas de composant optoélectronique.

La partie avant d'une embase passive montée sur un panneau d'un appareil électronique reçoit une fiche ; la partie arrière est reliée, dans le dispositif électronique, à une ou deux fibres optiques, chaque fibre étant affectée à un sens de transmission. Chaque fibre comporte à une autre extrémité une fiche optique qui se raccorde à une embase active, émission ou réception, ladite embase étant équipée d'une diode photométtrice lorsqu'il s'agit d'une embase émission, ou d'une diode photoréceptrice lorsqu'il s'agit d'une embase réception. Ces embases actives sont bien entendu fixées sur, ou près, d'un circuit électronique tel que par exemple une carte de circuit imprimé, la diode, photoémettrice ou photoréceptrice, étant connectée audit circuit électronique.

Ce type de raccordement présente un certain nombre d'inconvénients :

- une liaison entre deux circuits électroniques de deux dispositifs présente plusieurs points de couplage,
- en cas de défaillance d'une diode, photoémettrice ou photoréceptrice, il faut remplacer dans le dispositif l'embase équipée de la diode défectueuse, celle-ci n'étant pas démontable,
- la présence dans un dispositif, de fibres optiques entre une embase passive et les circuits électroniques, pose des problèmes d'encombrement, en particulier pour le logement des fibres optiques qui ont des rayons de courbure minimum imposés relativement importants et dont il faut prévoir une réserve de longueur ; la fiabilité des dispositifs, donc d'une liaison, et la durée de vie des fibres optiques dans un dispositif sont de ce fait compromises lorsque l'encombrement des dispositifs est limité, sans pour autant être aussi réduit qu'il pourrait l'être sans la présence desdites fibres optiques.

On connaît également, par le brevet français 2 440 009 une embase et un corps d'embout récepteur équipé d'une photodiode, ledit embout récepteur étant fixé sur une extrémité de l'embase par deux vis traversant avec un jeu important deux perçages ménagés dans le corps d'embout récepteur, l'embase comportant deux perçages filetés pour recevoir lesdites vis. L'embase reçoit une fiche munie d'un embout à l'extrémité duquel est fixée l'extrémité d'une fibre optique, et le corps d'embout récepteur est déplacé jusqu'à obtenir la meilleure transmission entre la fibre optique et le cristal de la photodiode, puis l'on serre lesdites vis pour immobiliser l'embout récepteur dans cette position.

Avec ce type d'embase, le remplacement d'une photodiode défectueuse nécessite le démontage de l'embase avec l'embout récepteur ; si par exemple on remplace l'embout récepteur défectueux par un nouvel embout récepteur, il faut alors procéder au positionnement du nouvel embout récepteur, positionnement généralement effectué par micromanipulation, ce qui est pratiquement impossible à réaliser sur un chantier, car l'utilisateur ne dispose pas généralement de l'appareillage nécessaire. Il faut donc disposer d'un ensemble embase embout récepteur de secours, ce qui évite le problème du positionnement, mais nécessite cependant le démontage de l'ensemble embase embout récepteur défectueux et le montage de l'ensemble de secours.

L'invention a pour but de remédier aux inconvénients des raccordements utilisés couramment, et notamment de réduire le nombre de points de couplage dans une liaison optique, de supprimer les fibres optiques dans un dispositif pour en diminuer l'encombrement, et de permettre le remplacement aisé d'une diode, photoémettrice ou photoréceptrice, défectueuse.

L'invention a pour objet une embase active de connecteur destinée à coopérer avec une fiche ayant une fibre optique, ladite embase comportant un corps ayant un trou cylindrique dans lequel est inséré un module optique constitué par une douille d'axe XX' dans une extrémité de laquelle est monté, à frottement dur, un support cylindrique équipé d'une diode photoémettrice ou photoréceptrice encapsulée dans un boîtier comportant un épaulement, caractérisée par le fait que ledit support cylindrique est un support creux ayant un fond comportant un trou de diamètre supérieur à un diamètre du boîtier dont l'épaulement est en appui contre ledit fond, à l'intérieur du support, que le support et le boîtier constituent un ensemble logé à l'intérieur de la douille, que ledit trou du support creux permet un déplacement du boîtier perpendiculaire à l'axe XX' de la douille pour positionner la diode sur ledit axe XX', et qu'après positionnement de la diode le boîtier est maintenu en position par des moyens de maintien insérés dans le support, ledit positionnement de la diode étant susceptible d'être effectué en cours de fabrication du module optique.

Les diodes photoémettrices telles par exemples les diodes électroluminescentes, DEL, et les diodes photoréceptrices telles par exemple les photodiodes, PIN, sont commercialisées, chacune selon deux types ; dans un premier type, la diode est à émission ou réception de faisceau lumineux du type parallèle, et dans un deuxième type la diode est à émission ou réception de faisceau lumineux du type convergent.

Dans le cas d'une diode photoémettrice du deuxième type le faisceau lumineux émis est convergent et dans le cas d'une diode photoréceptrice du deuxième type le faisceau lumineux est divergent en direction de la diode photoréceptrice à partir d'un point de focalisation situé en avant de la diode ; l'expression de type convergent est utilisée tant pour un faisceau lumineux émis que pour un faisceau lumineux reçu, par opposition au cas d'un faisceau lumineux de type parallèle.

Un module optique actif selon l'invention pourra être équipé d'un diode du premier ou du deuxième type, et une embase selon l'invention pourra être équipée d'un ou de plusieurs modules optiques actifs, sans tenir compte du type de la diode équipant un module optique actif.

Quel que soit le type des diodes, celles-ci sont généralement commercialisées sous forme de boîtier T05 ou T018, mais bien entendu d'autres boîtiers peuvent être utilisés dans le module optique selon l'invention.

Quel que soit le type d'une diode équipant un module actif, donc une embase, la fiche du connecteur reste la même.

L'invention sera bien comprise par la description qui va suivre d'exemples de réalisations illustrés par les figures annexées dans lesquelles :

- la figure 1 représente schématiquement un connecteur comportant une embase avec un module optique, le module optique étant équipé d'une diode d'un premier type,
- la figure 2 représente schématiquement un connecteur comportant une embase avec un module optique, le module optique étant équipé d'un diode d'un deuxième type,
- la figure 3 représente en coupe partielle une embase selon l'invention montée sur un dispositif électronique,
- la figure 4 est une vue de face d'un corps de l'embase de la figure 3,
- la figure 5 est une vue de face d'une variante d'un corps de l'embase de la figure 3,
- la figure 6 est une vue en perspective éclatée d'un module optique de la figure 3,
- la figure 7 représente en coupe longitudinale le module optique de la figure 6,

- la figure 8 représente en coupe longitudinale une variante du module optique de la figure 7,
- la figure 9 représente en coupe longitudinale une autre variante du module optique de la figure 7.

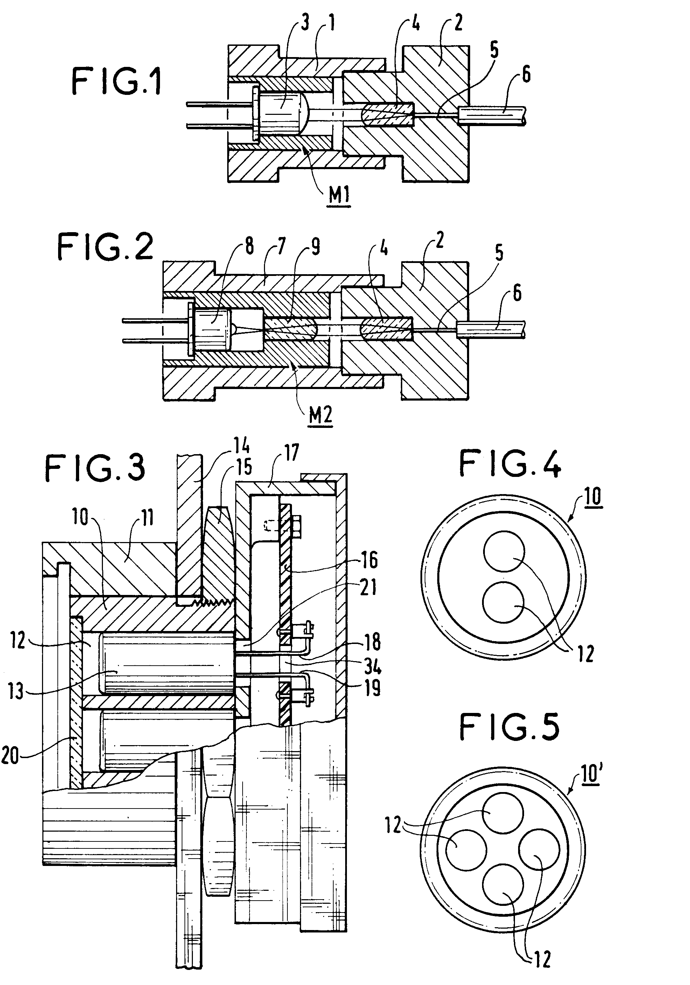

Dans la figure 1 le connecteur comprend une embase 1 et une fiche 2. L'embase 1 comporte un module optique M1 équipé d'une diode 3 raccordée électriquement à un circuit électronique non représenté. La diode 3 est d'un premier type, c'est-à-dire à émission ou réception de faisceau lumineux du type parallèle.

La fiche 2 comporte une lentille barreau 4 reliée à l'extrémité d'une fibre optique 5 transmettant un faisceau lumineux parallèle en provenance ou à destination de la diode 3 ; la référence 6 désigne la fibre optique 5 gainée.

Dans la figure 2 le connecteur comprend une embase 7 et une fiche 2 identique à celle de la figure 1. L'embase 7 comporte un module optique M2 équipé d'une diode 8 également raccordée électriquement à un circuit électronique non représenté. La diode 8 est d'un deuxième type, c'est-à-dire à émission ou réception de faisceau lumineux du type convergent ; le module M2 comporte également une lentille barreau 9 de sorte que le faisceau lumineux entre les lentilles barreau 9 et 4 est du type parallèle.

Dans ces figures 1 et 2 les diodes 3 et 8 sont bien entendu soit photoémettrices soit photoréceptrices, ce qui ne change pas le faisceau lumineux entre la fibre optique 5 et la diode, 3 ou 8 ; seul le sens de propagation du faisceau lumineux change.

Dans les deux figures, le faisceau lumineux entrant ou sortant de l'embase et donc du module optique est du type parallèle, de sorte que la fiche 2 est identique dans les deux figures et ne dépend pas du type de la diode, c'est-à-dire du type, parallèle ou convergent du faisceau lumineux émis ou reçu par la diode. On a donc un système afocal qui de ce fait demande moins de précision de positionnement longitudinal entre embase et fiche.

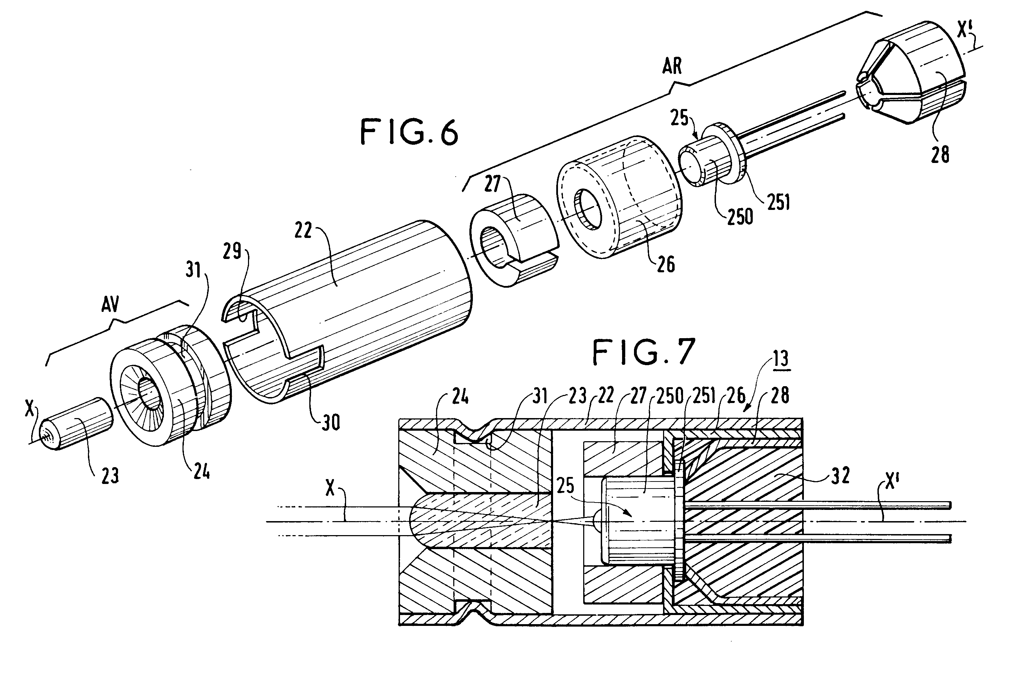

La figure 3 représente en coupe partielle une embase de l'invention montée sur un dispositif électronique. L'embase comprend un corps 10 monté dans une enveloppe 11. Le corps 10 comporte des trous cylindriques 12, par exemple deux, comme représenté figure 4, qui est une vue de face du corps 10 ; la figure 5 est une variante du corps de l'embase selon laquelle celui-ci, référencé 10', comporte quatre trous. Chaque trou 12 reçoit un module optique 13 de l'invention, de forme cylindrique ; chaque module optique est monté à frottement doux sans jeu dans un trou 12, de sorte que son axe géométrique coïncide avec celui du trou.

L'embase est montée sur une face avant d'un panneau 14 du dispositif électronique, et fixée à l'aide par exemple d'un écrou 15. Dans le dispositif électronique une carte à circuit imprimé 16 est montée sur une plaque support 17 ; le corps 10 de l'embase vient contre la plaque support 17 ; le module optique 13 vient également en butée contre la plaque support 17, à la périphérie d'un trou 21 que présente cette plaque au droit du module. Le module optique comporte une diode, DEL ou PIN, et les pattes 18 et 19 de cette diode qui passent à travers le trou 21 et un trou 34 prévu à cet effet dans la carte 16 sont connectées, par exemple par soudure, au circuit imprimé sur la carte 16. Le raccordement des pattes 18 et 19 au circuit imprimé peut également être réalisé par l'intermédiaire d'un connecteur miniature en réduisant au maximum la longueur des connexions.

La face avant du corps 10 comporte un hublot 20 à faces parallèles monté de manière étanche sur le corps. Ce hublot, transparent, protège les modules optiques et peut être aisément nettoyé.

Ce hublot est également démontable, ce qui permet sont remplacement s'il est cassé ; cela permet également le remplacement d'un module optique défectueux : ledit module, préalablement déconnecté du circuit imprimé, est extrait par la face avant du corps 10, les trous 21 et 34 autorisant le passage d'un outil permettant d'appliquer au module une force de pression qui aide à cette extraction, et le module de remplacement est ensuite inséré, toujours par la face avant du corps 10, à la place du module défectueux dans le trou cylindrique 12 correspondant puis raccordé au circuit imprimé sur la carte 16. Il n'est donc pas nécessaire de démonter l'embase du panneau 14 pour remplacer un module optique défectueux.

La figure 6 représente, en perspective éclatée, un module optique 13 selon l'invention, la figure 7 représentant le module optique monté, en coupe longitudinale. Le module optique comprend une douille 22, qui est un tube cylindrique d'axe géométrique XX', renfermant une lentille barreau 23 montée dans une bague de centrage 24, une diode 25 avec un support 26, les pattes de raccordement électrique de la diode 25 dépassant hors de la douille 22, un radiateur 27 et une bague ressort 28 ; la diode est du deuxième type, c'est-à-dire à émission ou réception de faisceau lumineux du type convergent, qu'il s'agisse d'une diode DEL ou d'une diode PIN. A l'exception de la lentille barreau 23 toutes les pièces sont métalliques. La diode 25, le support 26, le radiateur 27 et la bague ressort 28 constituent la partie arrière AR de l'équipement intérieur de la douille 22, l'ensemble formé par la lentille barreau 23 et sa bague de centrage 24 en constituant la partie avant AV.

La diode 25 est en boîtier, par exemple T018 ou T05, à corps cylindrique 250 se terminant par un épaulement 251 du côté opposé à l'accès optique de la diode. Son support 26 se présente sous la forme d'un cylindre creux ouvert à l'une de ses extrémités avec, à l'autre extrémité, un fond percé d'un trou dont le diamètre est supérieur au diamètre du corps cylindrique 250 de la diode 25 et inférieur à celui de l'épaulement 251 de cette diode.

Le support 26 est monté à frottement dur dans la douille 22 avec son fond tourné vers la partie avant AV. La diode 25, introduite par l'intérieur du support 26, traverse avec du jeu le fond de ce support pour déboucher hors de celui-ci tandis que son épaulement vient en appui contre le fond du support, le jeu entre le corps cylindrique de la diode 25 et le fond du support 26 permettant un centrage de la diode 25 sur l'axe XX' de la douille, qui est aussi l'axe géométrique du module optique. Le radiateur 27, qui est une pièce cylindrique ayant une fente longitudinale est monté sur la diode à l'extérieur du support 26 ; il assure, en plus de son rôle de dissipateur thermique, le maintien de la diode en position, c'est-à-dire contre le support 26.

La bague de centrage 24 avec la lentille barreau 23 collée à l'intérieur étant montée dans la douille 22, l'axe de la lentille barreau étant confondue avec celui de la douille, la diode est alors micromanipulée sur un banc de mesure afin d'aligner la puce de la diode, c'est-à-dire sa partie active, sur l'axe XX' de la douille de manière que le module optique présente un axe optique confondu avec l'axe XX' de la douille.

Dans le cas d'une diode photoréceptrice, ce réglage s'effectue en envoyant au module optique un faisceau lumineux parallèle dont l'axe optique est confondu avec l'axe XX' de la douille 22 et en mesurant la puissance électrique en sortie de la diode de manière à repérer la position de la diode pour laquelle cette puissance est maximale. Dans le cas d'une diode photoémettrice, ce réglage s'effectue en excitant électriquement la diode et en mesurant la puissance optique recueillie en sortie du module selon l'axe XX' de la douille de manière à repérer la position de la diode pour laquelle cette puissance est maximale. Une fois le réglage obtenu, on procède au montage de la bague ressort 28 qui est de forme cylindrique avec une extrémité tronconique partagée en quatre secteurs par des fentes dont l'une s'étend sur toute la hauteur de la bague ; la bague est montée à l'intérieur du support 26, son extrémité tronconqiue venant presser la diode par l'épaulement de celle-ci, contre le support. L'immobilisation définitive de l'ensemble est obtenue en coulant une résine 32 à l'intérieur de la bague ressort 28.

La bague de centrage 24 est montée à frottement gras dans la douille, afin de permettre un réglage d'optimisation du couplage longitudinal entre la lentille barreau 23 et la diode 25. Deux encoches 29, 30 pratiquées dans la douille 22 permettent le déplacement de la bague de centrage pour effectuer ce réglage. Lorsque le réglage est terminé, la bague de centrage 24 est immobilisée, par sertissage de la douille en trois points par exemple, au niveau d'une gorge 31 de la bague de centrage.

Le module optique peut être équipé d'une diode en boîtier de toute autre forme que le boîtier décrit en regard des figures 6 et 7 en utilisant bien entendu un support approprié. A titre d'exemple le module optique a 20 mm de long et 10 mm de diamètre.

L'invention permet donc de réaliser des modules ayant des puissances émissives différentes, des longueurs d'ondes différentes, selon les caractéristiques des diodes utilisées. D'autre part les embases ne sont pas spécialisées, d'un point de vue optique, puisque les caractéristiques dépendent du ou des modules optiques utilisés. L'invention permet d'avoir dans une même embase ayant par exemple un corps tel que celui de la figure 5, deux voies d'émission de caractéristiques différentes : puissance et longueurs d'ondes, ainsi que deux voies de réception différentes ; pour changer les caractéristiques d'une voie, émission ou réception, il suffit de changer de module optique.

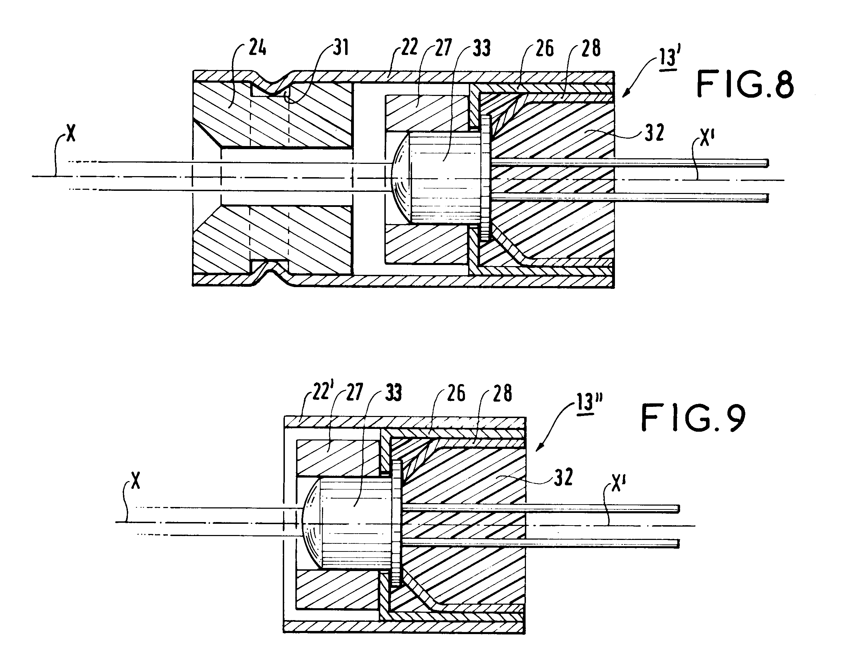

La figure 8 représente, en coupe longitudinale une variante du module optique de la figure 7. Dans le module selon cette variante référencé 13', la diode 33 est du premier type, le faisceau lumineux étant du type parallèle. Comme représenté figure 1, l'embase ne comporte pas de lentille barreau dans ce cas. Dans le module optique de la figure 8 la bague de centrage 24 ne comporte pas de lentille barreau, le module optique étant par ailleurs identique à celui de la figure 7, et la partie active de la diode est alignée sur l'axe XX' de la douille 22 du module optique.

Dans la figure 9 on a représenté en coupe longitudinale un module optique référencé 13", qui est une variante du module optique 13' de la figure 8.

Dans cette figure 9, la diode 33 est du premier type, et la bague de centrage 24 de la figure 8 a été supprimée, de sorte que la longueur de la douille référencée ici 22', donc du module optique, est plus petite que celle de la douille 22 de la figure 8.

Il est donc possible, en utilisant des diodes du premier type, d'utiliser des corps d'embase plus courts, mais on ne peut pas remplacer un module optique de la figure 9 par un module optique des figures 7 ou 8. Par contre dans le cas d'un corps prévu pour être équipé de modules optiques selon les figures 7 ou 8 on peut équiper ce corps de modules selon la figure 9.

Les fiches, figures 1 et 2, qui coopèrent avec les embases sont de type connu ; il faut bien entendu que chaque lentille barreau d'une fiche vienne en regard d'un module optique de l'embase qui comporte un corps selon la figure 4 ou la figure 5, ou d'un autre type, l'axe géométrique du barreau et l'axe optique du faisceau lumineux parallèle émis ou reçu étant confondus ; lorsque la fiche est montée sur l'embase l'axe du trou 12 est confondu avec l'axe de la lentille barreau de la fiche. Le corps de l'embase est monté de toute manière connue dans l'enveloppe qui comprendra des moyens d'accrochage et de verrouillage avec une fiche de tout type connu, ceux-ci ne faisant par partie de l'invention.

Lorsqu'un module optique est récepteur, l'axe du faisceau lumineux parallèle qu'il reçoit de la fiche étant confondu avec l'axe du trou 12 et le module optique étant monté sans jeu dans ledit trou, il en résulte que l'axe géométrique de la douille 22, donc du module optique, est confondu avec l'axe optique du faisceau lumineux reçu, que ledit module optique comporte ou non une lentille barreau. Comme lors du montage du module optique on a aligné la partie active de la diode sur l'axe XX' de la douille. Cette partie active de la diode se trouve alors automatiquement alignée sur l'axe optique du faisceau lumineux reçu de la fiche de sorte que le remplacement d'un module optique récepteur ne nécessite aucune opération d'alignement.

Lorsqu'un module optique est émetteur, et qu'il comporte ou non une lentille barreau, l'opération d'alignement sur l'axe XX' de la douille revient à faire coïncider l'axe du faisceau lumineux parallèle sortant du module optique avec l'axe XX', de sorte que le remplacement d'un module optique émetteur ne nécessite aucune opération d'alignement puisque l'axe XX' coïncide avec l'axe du trou 12 et que cet axe coïncide avec l'axe de la lentille barreau de la fiche.

L'embase et notamment le corps de celle-ci est réalisée en tous matériaux généralement utilisés pour les connecteurs ; ces matériaux étant métalliques ou plastiques. Les embases selon l'invention étant utilisées pour raccorder des dispositifs électroniques entre eux, elles sont destinées à être montées à l'extérieur des dispositifs, sur un panneau de ceux-ci. Lorsque ces dispositifs sont disposés dans des locaux, il est possible d'utiliser des matériaux plastiques ; par contre pour toute utilisation à l'extérieur, c'est-à-dire à ciel ouvert et dans des conditions climatiques sévères par exemple entre -40°C et +55°C on utilisera de préférence pour le corps et l'enveloppe d'une embase, des matériaux métalliques éventuellement traités contre la corrosion, notamment dans le cas d'atmosphères chaudes et humides, les dimensions de l'embase étant adaptées aux conditions d'emploi afin de conférer à l'embase une solidité mécanique lui permettant de supporter des chocs, des vibrations, de même d'ailleurs pour les fiches, afin d'avoir un connecteur dit de "terrain" dans le langage des utilisateurs.

Une embase active selon l'invention peut bien entendu ne comporter qu'un module optique ; dans ce cas le corps de l'embase ne comporte qu'un trou ; c'est le cas d'une liaison unidirectionnelle entre un dispositif émetteur et un dispositif récepteur.

## Revendications

1. Embase active de connecteur destinée à coopérer avec une fiche ayant une fibre optique, ladite embase comportant un corps (1) ayant un trou cylindrique (12) dans lequel est inséré un module optique (13) constitué par une douille (22) d'axe XX′ dans une extrémité de laquelle est monté, à frottement dur, un support (26) cylindrique équipé d'une diode (25, 33) photoémettrice ou photoréceptrice encapsulée dans un boîtier comportant un épaulement (251), caractérisée par le fait que ledit support cylindrique est un support creux ayant un fond comportant un trou de diamètre supérieur à un diamètre du boîtier dont l'épaulement est en appui contre ledit fond, à l'intérieur du support, que le support et le boîtier constituent un ensemble logé à l'intérieur de la douille (22), que ledit trou du support creux permet un déplacement du boîtier perpendiculaire à l'axe XX′ de la douille pour positionner la diode sur ledit axe XX′, et qu'après positionnement de la diode le boîtier est maintenu en position par des moyens de maintien insérés dans le support, ledit positionnement de la diode étant susceptible d'être effectué en cours de fabrication du module optique.

2. Embase de connecteur selon la revendication 1, caractérisé par le fait que le corps (10) comprend au moins deux trous cylindriques (12) dans chacun desquels est logé un module optique, et que ladite embase coopère avec une fiche comportant autant de fibres optiques qu'il y a de module optiques dans l'embase.

3. Embase selon l'une des revendications 1 et 2, caractérisé par le fait que lesdits moyens de maintien sont constitués par une bague ressort (28) insérée à l'intérieur du support (26) et pressant ledit épaulement (251) du boîtier contre le fond du support.

4. Embase selon la revendication 3, caractérisée par le fait qu'une résine est coulée dans la bague ressort (28) pour fixer la diode.

5. Embase selon l'une des revendications 1 et 2, caractérisé par le fait qu'un radiateur (27) en forme de bague cylindrique ayant une fente longitudinale est monté sur le corps cylindrique (250) du boîtier de la diode.

6. Embase selon l'une des revendications 1 et 2, caractérisé par le fait que la diode (33) d'au moins un module optique est à émission ou réception d'un faisceau lumineux parallèle.

7. Embase selon l'une des revendications 1 et 2, caractérisé par le fait que la diode (25) d'au moins un module optique est à émission ou réception d'un faisceau lumineux de type convergent, que la douille (22) du module optique comporte, en avant de la diode, une bague de centrage (24) munie au centre d'une lentille barreau (23) ayant un axe confondu avec l'axe XX′ de la douille, ladite bague et ladite lentille barreau constituant un ensemble logé à l'intérieur de la douille, et que ladite bague de centrage est fixée par sertissage de la douille après positionnement longitudinal de la lentille barreau par rapport à la diode, ladite lentille barreau émettant ou recevant par une face opposée à la diode un faisceau lumineux parallèle d'axe confondu avec l'axe XX′ de la douille, ledit positionnement de la lentille barreau étant susceptible d'être effectué en cours de fabrication du module optique.

8. Embase selon l'une des revendications 1 et 2, caractérisée par le fait que le corps (10) comporte un hublot (20) démontable, à faces parallèles, à une extrémité avant de l'embase en regard de la fiche.

## Claims

1. An active connector base for co-operating with a plug having an optical fiber, said base comprising a body (10) having a cylindrical hole (12) in which an optical module (13) is inserted, said module being constituted by a sleeve (22) coaxial to an axis XX', with a cylindrical support (26) being prss-fitted into one end of said sleeve and including a light-emitting (25) or a light-receiving diode (33) encapsulated in a casing having a shoulder (251), characterized in that said cylindrical support is a hollow support having a bottom with a hole whose diameter is greater than the diameter of the casing whose shoulder is pressed against said bottom, inside the support, in that the support and the casing constitute an assembly received inside the sleeve (22), in that said hole through the hollow support allows the casing to be moved perpendicularly to the axis XX' of the sleeve in order to align the diode to said axis XX', and in that after the diode has been positioned, the casing is kept in position by retention means inserted in the support, said diode positioning being suited to be performed during manufacture of the optical module.

2.   A connector base according to claim 1, characterized in that the body (10) includes at least two cylindrical holes (12) each having an optical module received therein, and in that said base co-operates with a plug having as many optical fibers as there are optical modules in the base.

3.   A base according to claim 1 or 2, characterized in that said holding means are constituted by a spring ring (28) inserted inside the support (26) and pressing said shoulder (251) of the casing against the bottom of the support.

4.   A base according to claim 3, characterized in that a resin is cast in the spring ring (28), in order to fix the diode.

5.   A base according to claim 1 or 2, characterized in that a cylindrical ring-shaped radiator (27) provided with a longitudinal slot is mounted in the cylindrical body (250) of the diode casing.

6.   A base according to claim 1 or 2, characterized in that the diode (33) of at least one of the optical modules is suitable for emitting or receiving a parallel light beam.

7.   A base according to claim 1 or 2, characterized in that the diode (25) of at least one optical module is suitable for emitting or receiving a light beam of the convergent type, in that the optical module sleeve (22) includes a centering ring (24) ahead of the diode and provided in its center with a rod lens (23) whose axis coincides with the sleeve axis XX', said ring and said rod lens constituting an assembly received inside the sleeve, and in that said centering ring is fixed by crimping the sleeve after the rod lens has been longitudinally positioned relative to the diode, said rod lens emitting or receiving a parallel light beam coaxial with the axis XX' of the sleeve via its face furthest from the diode, said positioning of the rod lens being suited to be performed during manufacture of the optical module.

8.   A base according to claim 1 or 2, characterized in that the body (10) includes a dismountable window (20), having parallel faces and disposed at a front end of the base looking at the plug.

**Patentansprüche**

1.   Aktiver Sockel für einen Stecker mit Lichtleitfaser, wobei der Sockel einen Körper (10) mit einem zylindrischen Loch (12) aufweist, in das ein optischer Modul (13) eingefügt ist, der aus einer Hülse (22) mit der Achse XX' besteht, wobei in ein Ende der Hülse mit Preßsitz ein zylindrischer Halter (26) eingebaut ist, der mit einer lichtaussendenden oder lichtempfangenden Diode (25, 33) versehen ist, die in ein Gehäuse mit Schulter (251) eingekapselt ist, dadurch gekennzeichnet, daß der zylindrische Halter ein hohler Halter ist, der einen Boden mit einem Loch aufweist, dessen Durchmesser größer als der Durchmesser des Gehäuses ist, wobei die Schulter von innen gegen den Boden des Halters anliegt, daß der Halter und das Gehäuse eine Baueinheit im Inneren der Hülse (22) bilden, daß das Loch des hohlen Halters eine Verschiebung des Gehäuses senkrecht zur Achse XX' der Hülse ermöglicht, um die Diode auf die Achse XX' auszurichten, und daß nach dem Ausrichten der Diode das Gehäuse durch Halterungsmittel, die in den Halter eingefügt sind, in sein Lage gehalten wird, wobei das Ausrichten der Diode bei der Herstellung des optischen Moduls erfolgen kann.

2.   Sockel nach Anspruch 1, dadurch gekennzeichnet, daß der Körper (10) mindestens zwei zylindrische Löcher (12) aufweist, in welchen je ein optischer Modul untergebracht ist, und daß der Sockel mit einem Stecker zusammenwirkt, der so viele Lichtleitfasern aufweist, wie es optische Module im Sockel gibt.

3.   Sockel nach den Ansprüchen 1 und 2, dadurch gekennzeichnet, daß die Halterungsmittel aus einem Federring (28) bestehen, der in das Innere des Halters (26) eingesetzt ist und die Schulter (251) des Gehäuses gegen den Boden des Halters preßt.

4.   Sockel nach Anspruch 3, dadurch gekennzeichnet, daß Harz in den Federring (28) gegossen ist, um die Diode zu fixieren.

5.   Sockel nach einem der Ansprüche 1 und 2, dadurch gekennzeichnet, daß ein zylindrischer Strahler (27) in Gestalt eines Ringes mit Längsschlitz auf dem zylindrischen Körper (250) des Gehäuses der Diode montiert ist.

6. Sockel nach einem der Ansprüche 1 und 2, dadurch gekennzeichnet, daß die Diode (33) mindestens eines optischen Moduls eine Sende- oder Enmpfangsdiode eines parallelen Lichtbündels ist.

7. Sockel nach einem der Ansprüche 1 und 2, dadurch gekennzeichnet, daß die Diode (25) mindestens eines optischen Moduls eine Sende- oder Empfangsdiode für ein konvergentes Lichtbündels ist, daß die Hülse (22) des optischen Moduls vor der Diode einen Zentrierring (24) aufweist, der in der Mitte mit einer Stablinse (23) ausgestattet ist, deren Achse mit der Achse XX' der Hülse zusammenfällt, wobei der Ring und die Stablinse eine im Inneren der Hülse gelagerte Einheit bilden, und daß der Zentrierring durch Einschnüren der Hülse nach dem Längspositionieren der Stablinse relativ zur Diode befestigt wird, wobei die Stablinse mit einer der Diode gegenüberliegenden Seite einen parallelen Lichtstrahl aussendet oder empfängt, dessen Achse mit der Achse XX' der Hülse zusammenfällt und das Positionieren der Stablinse bei der Herstellung des optischen Moduls erfolgen kann.

8. Sockel nach einem der Ansprüche 1 und 2, dadurch gekennzeichnet, daß der Körper (10) ein demontierbares Fenster (20) mit parallelen Stirnflächen an einem Vorderende des Sockels gegenüber dem Stecker aufweist.

FIG.1

FIG.2

FIG.3

FIG.4

FIG.5

FIG.6

FIG.7

EP 0 282 766 B1

FIG.8

FIG.9

EP 0 282 766 B1